# EUROPÄISCHE PATENTSCHRIFT

(11) **EP 1 662 925 B1**
(45) Veröffentlichungstag und Bekanntmachung des Hinweises auf die Patenterteilung: **27.10.2010**
(21) Anmeldenummer: 04802612.4
(22) Anmeldetag: 20.09.2004
(51) Int. Cl.: A43B 9/18, A43B 3/10, A43B 3/12, A43B 9/04

(54) **VERFAHREN ZUR HERSTELLUNG EINES SCHUHES**
METHOD FOR THE PRODUCTION OF A SHOE
PROCEDE DE FABRICATION D'UNE CHAUSSURE

(30) Priorität: 19.09.2003 DE 10343886
(43) Veröffentlichungstag der Anmeldung: 07.06.2006
(73) Patentinhaber: ALSA GmbH, D-36396 Steinau-Uerzell (DE)
(72) Erfinder: HERBER, Karl-Heinrich, 36391 Sinntal-Mottgers (DE)
(74) Vertreter: Hebing, Norbert
(86) Internationale Anmeldenummer: PCT/DE2004/002100
(87) Internationale Veröffentlichungsnummer: WO 2005/027672

(56) Entgegenhaltungen:
- DE-A1- 10 156 529
- GB-A- 708 502
- GB-A- 1 482 277
- US-A- 4 333 193

## Beschreibung

Die Erfindung betrifft ein Verfahren zur Herstellung eines Schuhes mit einem innerhalb einer einen oberen Gießformrand aufweisenden Gießform erzeugten Schuhboden und einem Schuhoberteil, welches aus einem Schaft und einer an dem Schaft befestigten, beim fertigen Schuh mit dem Schuhboden verbundenen Decksohle gebildet ist, die zur Seite hin mit einem Decksohlenrand übersteht, wobei in das aus Decksohle und Schaft bestehende Schuhoberteil ein Leisten eingesetzt und das Schuhoberteil dann mit eingesetztem Leisten nach dem Einfüllen des Schuhbodenmaterials zum Verschließen der Gießform mit ihrem Decksohlenrand auf den Gießformrand aufgesetzt und zur Abdichtung der Gießform mittels eines Andrückrahmens von oben her auf den Decksohlenrand und damit auf den Gießformrand gedrückt wird, so dass es dann in der Gießform durch das flüssige Schuhbodenmaterial zu einer Verbindung zwischen der Decksohle und dem Schuhboden kommt, und bei dem der Decksohlenrand nach dem Entformen des Schuhes abgetrennt wird.

Ein Verfahren der vorstehenden Art ist Gegenstand der DE 101 56 529 A1. Bei dem bekannten Verfahren liegen der Decksohlenrand und der Schaftrand übereinander auf dem Gießformrand auf. Der Schaftrand ist zu diesem Zweck nach außen hin umgeschlagen. Deshalb sieht man am fertigen Schuh wie bei einem Schuh der Flexible-Bauart seitlich den umgeschlagenen Schaftrand. Wenn es sich bei dem Schuh um eine Sandale oder einen anderen Schuh handelt, bei dem der Schaft nicht über den gesamten Außenumfang des Schuhbodens verläuft, dann sieht man aufgrund dieser Bauart in einigen Bereichen von oben her den Rand der Decksohle und in anderen Bereichen den nach außen umgeschlagenen Schaftrand, was zu einem oftmals als nicht vorteilhaft empfundenen Aussehen führt.

Der Erfindung liegt das Problem zugrunde, ein Verfahren der eingangs genannten Art so weiterzubilden, dass beim fertigen Schuh der Rand des Decksohlenmaterials rundum sichtbar bleibt und dass auf einfache Weise ein komfortabel zu tragender Schuh geschaffen wird.

Dieses Problem wird erfindungsgemäß dadurch gelöst, dass ausschließlich der Decksohlenrand auf dem Gießformrand aufliegt und der Schaft innenseitig an der Decksohle befestigt ist, so dass das Schuhbodenmaterial die Decksohle gegen den am Leisten anliegenden Schaftrand drückt.

Durch ein solches Verfahren bleibt der Rand des Decksohlenleders rundum sichtbar, wodurch der fertige Schuh eine sehr hochwertige Optik erhält. Entgegen den Erwartungen springt der Schaftrand gegenüber der Decksohle nicht zum Fuß hin vor, weil das ausschäumende Schuhbodenmaterial die Decksohle so stark gegen den Schaftrand und den Leisten drückt, dass der Schaftrand sich in das Material der Decksohle drückt. Es ist deshalb nach dem Anschäumen des Schuhbodens kein Schärfen der Schaftteile notwendig.

Besonders fest ist der Schaft mit der Decksohle verbunden, wenn gemäß einer Weiterbildung des erfindungsgemäßen Verfahrens der Schaftrand durch eine Naht mit der Decksohle verbunden ist.

Besonders vorteilhaft ist das erfindungsgemäße Verfahren anwendbar, wenn es sich bei dem Schaft um die Beriemung einer Sandale handelt.

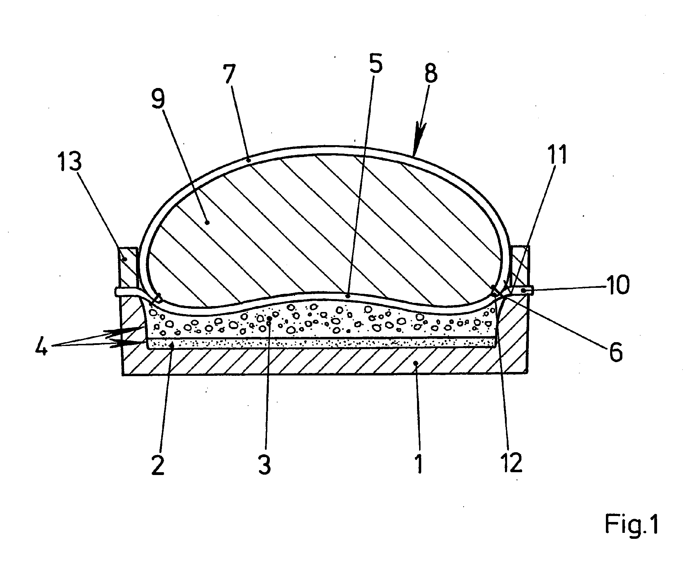

Die Erfindung lässt verschiedene Ausführungsformen zu. Zur weiteren Verdeutlichung ihres Grundprinzips ist in der
- Fig. 1: ein Querschnitt durch eine Gießform mit einem darin eingesetzten Schuh und in
- Fig. 2: ein vergrößerter Ausschnitt aus Fig. 1,
dargestellt und wird nachfolgend beschrieben.

Die Zeichnung zeigt eine Gießform 1, in welche zunächst von oben her eine ihren freien Innenquerschnitt vollständig ausfüllende Laufsohle 2 aus abriebfestem Material eingelegt wurde. Dann füllt man in die Gießform 1 ein Sohlenmaterial, insbesondere ein Kork-Latex-Gemisch, ein, durch welches im fertigen Zustand eine Fußformsohle 3 entsteht. Diese Fußformsohle 3 bildet zusammen mit der Laufsohle 2 einen Schuhboden 4.

Die Fußformsohle 3 wird nach oben hin von einer Decksohle 5 abgedeckt, welche mittels einer Naht 6 mit einem Schaft 7 verbunden ist, wodurch ein Schuhoberteil 8 entsteht. Die erforderliche Form des Schuhoberteils 8 wird durch einen in diesem eingesetzten Leisten 9 erzeugt.

Wichtig für das Verfahren ist, dass der Schaft 7 einen Schaftrand 12 hat, der im Gegensatz zu dem Verfahren nach der genannten DE 101 56 529 A1 nicht nach außen umgeschlagen ist, sondern auf der Innenseite der Decksohle 5 in der Ebene des Randbereiches der Fußformsohle 3 verläuft und dort mit ihr durch die Naht 6 vernäht ist.

Nach dem Einlegen der Laufsohle 2 und dem Einfüllen des die Fußformsohle 3 bildenden Kork-Latex-Gemisches wird das Schuhoberteil 8 mit dem Leisten 9 von oben her in die Gießform 1 gesetzt. Dabei gelangt ein Decksohlenrand 10 auf einen oberen Gießformrand 11. Von oben her wird dann ein Andrückrahmen 13 auf den Decksohlenrand 10 gesetzt, so dass der Andrückrahmen 13 den Decksohlenrand 10 auf den Gießformrand 11 drücken kann und die Gießform 1 dadurch dichtend verschlossen ist. Anschließend heizt man die Gießform 1 auf, wodurch es zu einem Verdichten des Kork-Latex-Gemisches und zu einem innigen Kontakt zwischen dem Kork-Latex-Gemisch und der Decksohle 5 und der Laufsohle 2 kommt und eine zuverlässige Verbindung dieser Teile eintritt.

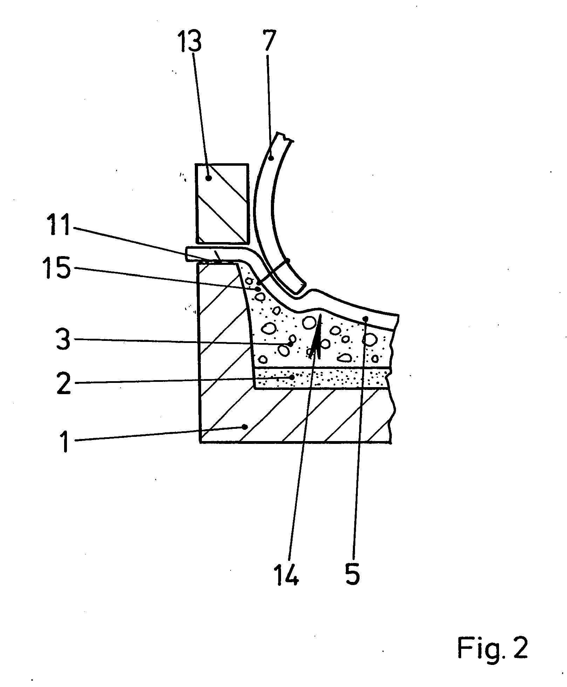

Beim Aufheizen wird ein Druck zwischen dem Boden des Leistens 9 und dem Kork-Latex-Gemisch ausgeübt. Dadurch drückt sich der Rand in die Decksohle 5, die selbst in eine sich bildende Vertiefung 14 im Kork-Latex-Gemisch eingedrückt wird. Obwohl der Rand des Schaftes 7 nicht angeschrägt ist, sondern gerade abgeschnitten ist, entsteht im Ergebnis ein glatter Übergang zwischen der dem Fuß zugewandten Fläche vom Schaft 7 und Decksohle 5, da der Schaft 7 entsprechend der Dicke seines Materials in die Decksohle eingedrückt ist. Dies ist vergrößert in Fig. 2 dargestellt. Eine Treppe im Übergang zwischen Schaft 7 und Decksohle 5, die sich beim Tragen des Schuhs am Fuß unangenehm bemerkbar machen würde, tritt nicht auf.

Des Weiteren überragt der Andrückrahmen 13 zumindest im Bereich des Schaftes 7 den Rand des Gießformrandes 11 nach innen, so dass ein außerhalb des Schaftes 7 liegender Kleberand 15 gebildet wird, an dem der Rand der Decksohle 5 mit der Fußformsohle 3 direkt verklebt ist.

Nach dem Abkühlen der Gießform 1 und dem Entformen des Schuhoberteils 8 wird der überstehende Decksohlenrand 10 abgeschnitten und damit der Schuh fertiggestellt.

### Bezugszeichenliste

- 1: Gießform
- 2: Laufsohle
- 3: Fußformsohle
- 4: Schuhboden
- 5: Decksohle

- 6: Naht
- 7: Schaft
- 8: Schuhoberteil
- 9: Leisten
- 10: Decksohlenrand

- 11: Gießformrand
- 12: Schaftrand
- 13: Andrückrahmen
- 14: Vertiefung
- 15: Kleberand

## Patentansprüche

1. Verfahren zur Herstellung eines Schuhes mit einem innerhalb einer einen oberen Gießformrand (11) aufweisenden Gießform erzeugten Schuhboden (4) und einem Schuhoberteil (8), welches aus einem Schaft (7) und einer an dem Schaft (7) befestigten, beim fertigen Schuh mit dem Schuhboden (4) verbundenen Decksohle (5) gebildet ist, die zur Seite hin mit einem Decksohlenrand (10) übersteht, wobei in das aus Decksohle (5) und Schaft (7) bestehende Schuhoberteil (8) ein Leisten (9) eingesetzt und das Schuhoberteil (8) dann mit eingesetztem Leisten (9) nach dem Einfüllen des Schuhbodenmaterials zum Verschließen der Gießform (1) mit ihrem Decksohlenrand (10) auf den Gießformrand (11) aufgesetzt und zur Abdichtung der Gießform (1) mittels eines Andrückrahmens (13) von oben her auf den Decksohlenrand (10) und damit auf den Gießformrand (11) gedrückt wird, so dass es dann in der Gießform (1) durch das flüssige Schuhbodenmaterial zu einer Verbindung zwischen der Decksohle (5) und dem Schuhboden (4) kommt, und bei dem der Decksohlenrand (10) nach dem Entformen des Schuhes abgetrennt wird, **dadurch gekennzeichnet, dass** ausschließlich der Decksohlenrand (10) auf dem Gießformrand (11) aufliegt und der Schaft (7) innenseitig an der Decksohle (5) befestigt ist, so dass das Schuhbodenmaterial die Decksohle (5) gegen den am Leisten (9) anliegenden Schaftrand (12) drückt.

2. Verfahren nach Anspruch 1, **dadurch gekennzeichnet, dass** der Schaftrand (12) durch eine Naht (6) mit der Decksohle (5) verbunden ist.

3. Verfahren nach den Ansprüchen 1 oder 2, **dadurch gekennzeichnet, dass** es sich bei dem Schaft (7) um die Beriemung einer Sandale handelt.

## Claims

1. Method for the production of a shoe with a sole (4), produced within a casting mould comprising an upper casting mould edge (11), and a shoe upper piece (8), which is formed from an upper (7) and an insole (5) fastened to the upper (7) and bonded to the sole (4) in the assembled shoe and which overlaps to the side with an insole edge (10) , wherein a last (9) is inserted into the shoe upper piece (8) consisting of the insole (5) and the upper (7), and then - after filling in the sole material - the shoe upper piece (8) with the inserted last (9) is placed with its insole edge (10) onto the casting mould edge (11) for closing the casting mould (1) and is pressed from above by means of a pressing frame (13) onto the insole edge (10) and thus onto the casting mould edge (11) for sealing the casting mould (1) so that a bond between the insole (5) and the sole (4) is then produced in the casting mould (1) by the fluid sole material, and wherein the insole edge (10) is cut off after demoulding the shoe, **characterised in that** only the insole edge (10) rests on the casting mould edge (11) and the upper (7) is fixed internally to the insole (5) so that the sole material presses the insole (5) against the edge of the upper (12) adjacent to the last (9).

2. Method according to Claim 1, **characterised in that** the edge of the upper (12) is connected to the insole (5) by a seam (6).

3. Method according to Claims 1 or 2, **characterised in that** the upper (7) is the strap of a sandal.

## Revendications

1. Procédé de fabrication d'une chaussure avec un fond de chaussure (4) créé dans un moule comportant un bord supérieur de moule (11) et avec une partie supérieure de chaussure (8), laquelle est formée d'une tige (7) et d'une semelle de propreté (5) fixée sur la tige (7), reliée avec le fond de la chaussure (4) lorsque la chaussure est finie, qui déborde vers le côté par un bord de la semelle de propreté (10), un embauchoir (9) étant inséré dans la partie supérieure de chaussure (8) consistant dans la semelle de propreté (5) et dans la tige (7) et, après remplissage de la matière destinée au fond de la chaussure, pour fermer le moule, la partie supérieure de chaussure (8) avec embauchoir (9) inséré étant ensuite montée par son bord de semelle de propreté (10) sur le bord du moule (11) et pour étanchéifier le moule (1) étant pressée au moyen d'un cadre de pression (13), à partir du haut sur le bord de la semelle de propreté (10) et donc sur le bord du moule (10), de sorte à créer dans le moule (1) par la matière liquide destinée au fond de la chaussure une liaison entre la semelle de propreté (5) et le fond de la chaussure (4) et après le démoulage de la chaussure, le bord de la semelle de propreté (10) étant séparé, **caractérisé en ce que**, exclusivement le bord de la semelle de propreté (10) s'appuie sur le bord du moule (11) et **en ce que** la tige (7) est fixée par le côté interne sur la semelle de propreté (5) de sorte que la matière destinée au fond de la chaussure presse la semelle de propreté (5) contre le bord de la tige (12) qui est adjacent à l'embauchoir (9).

2. Procédé selon la revendication 1, **caractérisé en ce que** le bord de la tige (12) est relié à la semelle de propreté (5) par une couture (6).

3. Procédé selon les revendications 1 et 2, **caractérisé en ce qu'**en ce qui concerne la tige (7), il s'agit des lanières d'une sandale.
